(19) Europäisches Patentamt

European Patent Office

Office européen des brevets

(11) Publication number: **0 496 067 A2**

## (12) EUROPEAN PATENT APPLICATION

(21) Application number: **91121178.7**

(22) Date of filing: **10.12.91**

(51) Int. Cl.⁵: **C08J 5/00, C08J 5/18**

(30) Priority: **19.01.91 JP 19426/91**

(43) Date of publication of application:
**29.07.92 Bulletin 92/31**

(84) Designated Contracting States:
**AT BE CH DE DK ES FR GB GR IT LI NL SE**

(71) Applicant: **SANYO CHEMICAL INDUSTRIES
LTD.
11-1, Ichinohashinomoto-cho
Higashiyama-ku, Kyoto-shi
Kyoto 605(JP)**

(72) Inventor: **Sumiya, Takashi, Sanyokasei
Minamihiyoshi-ryo
10-1, Imagumano Minamihiyoshi-cho
Higashiyama-ku, Kyoto-shi 605(JP)**
Inventor: **Date, Masashi, Sanyokasei
Higashiyama-ryo
4-18, Imagumano Minamitani-cho
Higashiyama-ku, Kyoto-shi 605(JP)**
Inventor: **Tanaka, Kenji
121-7, Seta Hashimoto-cho
Otu-shi, Shiga-ken 520-21(JP)**

(74) Representative: **Kador & Partner
Corneliusstrasse 15
W-8000 München 5(DE)**

(54) Method for producing formed articles of water-absorbing hydrogel.

㊹ The invention relates to a method for producing formed articles of water-absorbing hydrogel, which comprises the steps of supplying an aqueous solution containing (a) a polymerizable monomer having a hydrophilic functional group, (b) a crosslinking agent and (c) a polymerization initiator to a polymerizing apparatus capable of polymerizing the aqueous solution in a form of layer, subsequently causing constant temperature polymerization of the solution by controlling the temperature of the system being polymerized to 20 to 70 °C without agitating the same, and forming the obtained hydrogel polymer, which has a water content of 20 to 70 % by weight, to any desired shape. Formed articles of the water-absorbing hydrogel have high absorption under non-pressure, high absorption under pressure and easy formability to a desired shape. In addition, there are no problems of pollution of working environments by fine powder. Thus, the formed articles according to the invention are useful for physiological commodities, paper diapers or like sanitary materials, drip absorbing materials, water-blocking materials for construction and civil engneering and so forth.

## Background of the Invention

### Field of the Invention

This invention relates to a method for producing formed articles of hydrogel having excellent water-absorbing ability.

### Description of the Prior Art

Water-absorbing resins are extensively utilized for sanitary materials, paper diapers and other physiological materials, and also for water retainers for soil. In these applications, they are used in the form of particles with grain sizes ranging from about 0.01 to about 5 mm. Therefore, for utilizing water-absorbing resins a specific apparatus for dispersing particles is necessary. During the particle dispersion, fine particles fly out from the apparatus, and thus the problems of pollution of the working environment and inhalation of such fine particles arose.

In the meantime, there are some well-known methods of obtaining formed articles of hydrogel. In one of such methods, to an aqueous solution of an acetoacetylized water-soluble polymer is added a crosslinking agent having at least two groups capable of reaction with the water-soluble polymer, and then a crosslinking reaction is caused to obtain a formed article of hydrogel, as disclosed in Japanese Published Patent Application (Kokai) No. 112604/1987. In another method, an aqueous solution of a water-soluble polymer based on sodium acrylate and a crosslinking agent having two or more groups capable of reaction with the water-soluble polymer, and then a crosslinking reaction is caused to obtain a formed article of hydrogel, as disclosed in Japanese Published Patent Application (Kokai) No. 79006/1983.

The above methods, however, require complicated processes for two stages of reaction, i.e., synthesis of the water-soluble polymer and subsequent crosslinking reaction. In addition, to obtain an improved water-absorbing capacity for the formed article of the hydrogel, it is desirable to utilize a water-soluble polymer having as high a molecular weight as possible. However, when such high molecular weight water-soluble polymer is used, it is necessary that an aqueous solution having a dilute concentration of the polymer must be used to ensure mixing uniformly with the crosslinking agent. Consequently, the water content of the obtained formed article of the hydrogel is increased and the water-absorbing capacity is reduced.

### Summary of the Invention

An object of the invention is to provide a method for producing formed articles of water-absorbing hydrogel with which both water absorption under non-pressure and absorption under pressure are high.

A further object of the invention is to provide a method for producing formed articles of water-absorbing hydrogel containing less water-soluble component and less residual monomer.

A still further object of the invention is to provide a method for producing formed articles of water-absorbing hydrogel and hydrogel polymer having suitable flexibility and elasticity.

Another object of the invention to provide a simple method for producing formed articles of water-absorbing hydrogels which have low water contents, can be readily formed and are excellent in water-absorbing capacity.

Still another object of the invention is to provide a method for producing formed articles of water-absorbing hydrogel and the hydrogel polymer being able to be readily formed into a desired shape without limitations imposed on the shape and size.

Still another object of the invention is to provide the formed articles of hydrogel, unlike water-absorbing resin powder, do not require any specific dispersing apparatus in their application and to provide the formed articles of hydrogel having no problems of pollution of working environments and inhalation of fine powder due to scattering of fine powder at the time of the dispersion.

Specifically, the invention concerns a method for producing formed articles of water-absorbing hydrogel comprising the steps of:

(I) supplying an aqueous solution containing (a) a polymerizable monomer having a hydrophilic functional group, (b) a crosslinking agent and (c) a polymerization initiator to a polymerizing apparatus capable of polymerizing said aqueous solution in a form of a layer;

(II) causing constant temperature polymerization of said aqueous solution by controlling the temperature of the system being polymerized to 20 to 70 °C without agitating said solution during polymerization, to obtain a hydrogel polymer having a water content of 20 to 70 % by weight; and

(III) forming the hydrogel polymer to a desired shape.

EP 0 496 067 A2

## Description of the Preferred Embodiment

According to the invention, as the polymerizable monomer (a) there may be used (1) vinyl monomers having at least one acid group in the molecule and/or water-soluble salts of such polymerizable monomers, (2) polymerizable monomers having at least one tertiary amino group and/or quaternary ammonium salt group in the molecule and (3) a polymerizable monomer having at least one hydroxyl group in the molecule.

Of the compounds (1), examples of polymerizable monomer having at least one acid group in molecule are monomers having at least one carboxylic acid group and those having at least one sulfonic acid group.

Examples of monomer having at least one carboxylic acid group are unsaturated monocarboxylic or polycarboxylic acid having carbon number of 2 to 10 [e.g., (meth)acrylic acid, crotonic acid, sorbic acid, maleic acid, itaconic acid and cinnamic acid] and anhydrides of such acids (e.g., maleic anhydride). The term "(meth)acrylic" means "acrylic" and/or "methacrylic", and "(meth)" is also used hereinafter in the same sense.

Examples of monomer having at least one sulfonic acid group are aliphatic vinylsulfonic acids having 2 to 10 carbon atoms or aromatic vinylsulfonic acids having 6 to 10 carbon atoms [e.g., vinylsulfonic acid, allylsulfonic acid, vinyltoluenesulfonic aicd and styrenesulfonic acid], (meth)acrylesulfonic acids [e.g., sulfoethyl (meth)acrylate and sulfopropyl (meth)acrylate] and (meth)acrylamide sulfonic acid [e.g., 2-acrylamide-2-methylpropane sulfonic acid).

Of the compounds (1), examples of water-soluble salts of polymerizable monomer having at least one acid group in molecule are alkaline metal salts (e.g., salts of sodium, potassium, lithium, etc.), alkaline earth metal salts (e.g., salts of calcium, magnesium, etc.) and ammonium and amine salts (e.g., salts of alkylamine with the alkyl group having 1 to 10 carbon atoms such as methylamine and trimethylamine and salts of alkanolamine with the alkanol group having 2 to 10 carbon atoms such as triethanolamine and diethanolamine) of polymerizable monomer having at least one carboxylic or sulfonic acid group explained previously.

Examples of the compounds (2), i.e., polymerizable monomers having at least one tertiary amino group and/or quaternary ammonium salt group, are (meth)acrylamide, reaction products of dialkylaminoalkyl-(meth)acrylate (wherein the alkyl group of the dialkyl has 1 to 4 carbon atoms, and the alkyl group of the alkyl(meth)acrylate has 1 to 4 carbon atoms) and alkyl halide with the alkyl group having 1 to 4 carbon atoms, or dialkyl sulfuric acid with the alkyl group having 1 to 4 carbon atoms [e.g., (meth)acryloyloxyethyi-trimethylammonium halide (halide herein being chloride or bromide, for instance), (meth)-acryloyloxyethyltrimethylammonium sulfate, (meth)acryloyloxyethyldimethylathylammonium chloride, (meth)acryloyloxyethyldiethylmethylammonium chloride, (meth)acryloyloxyethyldimethylbenzylammonium chloride, (meth)acryloyloxypropyltrimethylammonium chloride, (meth)acryloyloxypropyltrimethylammonium sulfate ], reaction products of dialkylaminohydroxyalkyl(meth)acrylate (wherein the alkyl group of the dialkyl has 1 to 4 carbon atoms, and the alkyl group of the alkyl(meth)acrylate has 1 to 18 carbon atoms) and alkyl halide with the alkyl group having 1 to 4 carbon atoms or dialkyl sulfuric acid with the alkyl group having 1 to 4 carbon atoms [e.g., (meth)acryloyloxyhydroxyethyltrimethylammonium halide (halide being herein chloride or bromide), (meth)acryloyloxy-hydroxyethyltrimethylammonium sulfate, (meth)-acryloyloxyhydroxypropyltrimethylammonium chloride, etc.], reaction products of dialkylaminoalkyl(meth)-acrylamide (wherein the alkyl group of the dialkyl has 1 to 4 carbon atoms, and the alkyl group of the alkyl-(meth)acrylamide has 1 to 4 carbon atoms) and alkyl halide with the alkyl group having 1 to 4 carbon atoms or dialkyl sulfuric acid (wherein the alkyl group of the dialkyl has 1 to 4 carbon atoms) [e.g., chlorides or bromides of trimethylaminoethyl(meth)acrylamide, chlorides of trimethylaminopropyl(meth)acrylamide, chlorides of diethylmethylaminopropyl(meth)acrylamide, etc.], reaction products of dialkylaminohydroxyalkyl(meth)acrylamide (wherein the alkyl group of the dialkyl has 1 to 4 carbon atoms, and the alkyl group of the alkyl(meth)acrylamide has 1 to 4 carbon atoms) and alkyl halide with the alkyl group having 1 to 4 carbon atoms or dialkyl sulfuric acid with the alkyl group having 1 to 4 carbon atoms [e.g., chlorides of trimethylaminohydroxyethyl(meth)acrylamide, chlorides of diethylmethylaminohydroxypropyl(meth)acrylamide, etc.], N-alkylvinylpyridium halides [e.g., N-methyl-2-vinylpyridinium halide (halide being herein chloride or bromide), N-methyl-4-vinylpyridinium chloride. etc.], trialkylallylammonium halides [e.g., trimethylallylammonium halides (halide being herein chloride or bromide), triethylallylammonium chloride, etc.] and vinyl pyrrolidone.

Examples of (3), the polymerizable monomers having at least one hydroxyl group in molecule, are hydroxymethyl(meth)acrylate, hydroxyethyl(meth)acrylate and hydroxypropyl(meth)acrylate.

These polymerizable monomers (1), (2) and/or (3) may be used alone or in combinations of two or more of them. Further, other polymerizable monomers may be incorporated for copolymerization, if necessary, in

3

proportions which do not greatly decrease the water-absorbing capacity.

The compounds (1) are preferred among the polymerizable monomers shown as (a). More preferred are polymerizable monomers having at least one carboxylic acid group in molecule, sodium salts of these monomers or potassium salts of these monomers, and combinations thereof.

When the compounds (1) as polymerizable monomer (a) are used, water-soluble salts thereof are preferably used together with them. The proportion of these water-soluble salts in the polymerizable monomer having acid groups is usually 50 to 90 mol %, preferably 60 to 80 mol %. If the proportion is below 50 mol %, the water-absorbing ability of the obtainable formed articles are reduced. If the proportion exceeds 90 mol %, on the other hand, the pH of obtainable formed articles is increased, so that problems such as the safety of the human skin are some times caused.

The proportion of water-soluble salt may be prepared (i.e., neutralized) in a desired stage of the process of hydrogel polymer production. For example, it is possible to carry out neutralization in the stage of polymerizable monomer (a) or after polymerization.

According to the invention, the concentration of polymerizable monomer (a) in aqueous solution is preferably 30 to 80 %, more preferably 35 to 70 %, especially preferably 40 to 60 % by weight, for molecular weight is increased with increasing polymerization concentration when the polymerization temperature is controlled in the temperature range according to the invention, i.e., 20 to 95 °C.

If the polymerization concentration is below 30 %, the obtained hydrogel polymer has low molecular weight, and consequently obtained formed articles thereof have low water absorption performance. If the polymerization concentration exceeds 80 %, on the other hand, the phase of the aqueous solution is reduced to a solid like state, and it is difficult to continue uniform polymerization. And further, the obtainable hydrogel polymers are hard and deteriorated in the forming properties.

According to the invention, as crosslinking agent (b) there may be used (4) compounds having at least two vinyl groups, (5) compounds having at least one vinyl group and having at least one group capable of reacting with a functional group of polymerizable monomer (a) and (6) compounds having at least two groups capable of reacting with functional groups of monomer (a).

Examples of the compounds (4) are as follows.

① Bis(meth)acrylamide :
N,N-alkylenebis(meth)acrylamides with the alkylene group having carbon numbers of 1 to 4 (e.g., N,N-methylenebisacrylamide).

② Diester or polyester of polyols and unsaturated monocarboxylic or polycarboxylic acid :
Di(meth)acrylic or poly(meth)acrylic acid esters of polyols [e.g., ethylene glycol tirmethylol propane, glycerol, polyoxyethylene glycol, polyoxypropyrene glycol, sorbitol etc.], di(meth)acrylic acid esters or poly(meth)acrylic acid esters of unsaturated polyesters [e.g., obtainable by reaction of above mentioned polyols and unsaturated acids such as maleic acid], for instance.

③ Carbamylester :
Carbamylesters obtainable by reacting polyisocyanate [e.g.,tolylene diisocyanate. hexamethylene diisocyanate, 4,4'-diphenylmethane diisocyanate and isocyanate-group-containing prepolymer (obtainable by reacting polyisocyanate such as mentioned above and a compound containing active hydrogen atom)] and hydroxyethyl(meth)acrylate.

④ Divinyl or polyvinyl compounds :
Divinyl benzene, divinyl toluene, divinyl xylene and divinyl ether, etc.

⑤ Di(meth)allyl or poly(meth)allyl ethers of polyols :
Di(meth)allyl or poly(meth)allyl ether, e.g., polyethyleneglycoldiallyl ether, allylated starch and allylated cellulose of polyols [e.g., alkylene glycol with the alkylene group having 2 to 4 carbon atoms, glycerol, polyalkylxylene glycol with the alkylene group having 2 to 4 carbon atoms, polyalkylene polyol with the alkylene group having 2 to 4 carbon atoms, etc.]

⑥ Diallyl or polyallyl ester of polycarboxylic acid :
Diallyl phthalate, diallyl adipate. etc.

⑦ Ester of unsaturated monocarbonic or polycarboxylic acid and mono(meth)allylether of polyol :
(Meth)acrylic acid ester of polyethyleneglycolmonoallylether etc.

⑧ Polyallyloxyalkanes :
Tetraallyloxyethane etc.

Examples of the compounds in (5) are ethylenically unsaturated compounds having at least one group capable of reacting with a functional group in (a), such as a hydroxyl group, an epoxy group and a cationic group (e.g., a tertiary amino group, a quarternary ammonium salt group; etc.) in the case where the functional group is an acid group, ethylenically unsaturated compounds having at least one hydroxyl group, epoxy group, carboxylic acid group, etc. in the case where the functional group is a tertiary amino group and/or quarternary ammonium salt group; and ethylenically unsaturated compounds having at least one epoxy group, cationic group, carboxylic acid group, etc. in the case where the functional group is a hydroxyl group.

Examples of the above mentioned compounds are unsaturated compounds containing a hydroxyl group [e.g. N-methylol(meth)acrylamide. etc.]; unsaturated compounds containing an epoxy group [e.g. glycidyl-(meth)acrylate, etc.]; unsaturated compounds containing a cationic group [e.g. N,N,N-trimethyl-N-(meth)-acryloyloxyethyltrimethylammonium chloride, N,N,N-triethyl-N-(meth)acryloyloxyethylammonium chloride, dimethylaminoethyl(meth)acrylate, diethylaminoethyl(meth)acrylate etc.] and unsaturated compounds containing carboxylic acid group [e.g. acrylic acid, crotonic acid, maleic acid and itaconic acid etc.] etc.

Examples of the compounds in (6) are those having at least two groups capable of reacting with functional groups in (a), such as hydroxyl groups, epoxy groups and cationic groups (e.g., tertiary amino groups, quarternary ammonium salt groups, etc.) in the case where the functional group is an acid group; those having at least two hydroxyl groups, epoxy groups, carboxylic acid groups, etc. in the case where the functional group is a tertiary amino group and/or quarternary ammonium salt group; and those having at least two epoxy groups, cationic groups, carboxylic acide groups and isocyanate groups in the case where the functional group is a hydroxyl group.

Examples of these compounds are compounds having two or more epoxy groups in the molecule [e.g. ethyleneglycoldiglycidyl ether, propyleneglycoldiglycidyl ether, glycerol-1,3-diglycidylether, polyethyleneglycoldiglycidylether.
1,6-hexanedioldiglycidylether, bisphenol-A-epichlorohydrin type epoxy resins, etc.]; compounds having at least two hydroxyl groups in the molecule [e.g. glycerol, ethylene glycol, propylene glycol, polyethylene glycol, polypropyrene glycol, etc.]; compounds having at least two amino groups in the molecule [e.g. ethylene diamine, diethylene triamine, triethylene tetramine, tetraethylene pentamine, etc.]; compounds having at least two carboxylic acid group in molecule [e.g. maleic acid, phthalic acid etc.]; compounds having at least two isocyanate groups in the molecule [e.g. 2,4-tolylene diisocyanate, hexamethylene diisocianate, 4,4'-diphenylmethane diisocyanate, etc.].

These compounds (6) may be used for reaction with polymerizable monomer (a) before polymerization or used for crosslinking reaction after polymerization.

Among the crosslinking agents (b) noted above, compounds (4) and (5) are preferred. More preferred are compounds (4). Particularly preferred are copolymerizable crosslinking agents having comparatively high water solubility, for instance N,N-methylenebis(meth)acrylamide, (poly)ethyleneglycoldi(meth)acrylate, tetraallyloxyethane, trimethylpropane tri(meth)acrylate etc.

According to the invention, the amount of crosslinking agent (b) is variable depending on the degree of self-crosslinking of polymerizable monomer (a), but usually it is 0.0001 to 5 %, preferably 0.001 to 2 %, more preferably 0.01 to 1.0 %, with respect to the weight of polymerizable monomer (a). If the amount of agent (b) exceeds 5 %, the obtainable hydrogel polymer will show excessive gel strength and water absorption performance is thus reduced. In addition, the obtainable hydrogel polymers are too fragile and have inferior forming properties. If the amount is less than 0.0001 %, on the other hand, the obtainable hydrogel polymers are too soft, and their forming properties are deteriorated.

According to the invention, as polymerization initiator (c) there may be used azo compounds (e.g., azobisisobuthyronitrile, azobiscyano valerate, 2,2'-azobis(2-diaminopropane)hydrochloride, etc.), inorganic peroxides (e.g., ammonium persulfate, potassium persulfate, sodium persulfate, etc.), organic peroxides (e.g., hydrogen peroxide, benzoyl peroxide, di-t-buthyl peroxide, cumene hydroperoxide, etc.) and redox initiators (e.g., combinations of such reducing agents as alkaline metal sulfites or bisulfites, ammonium sulfite or bisulfite and ascorbic acid and such oxidizing agents as alkaline metal persulfates, ammonium persulfate and peroxides). Each of these polymerization initiators may be used either alone or in combination with others.

Among these compounds, thermal decomposition type radical polymerization initiators such as azo compounds, inorganic peroxides and organic peroxides etc. are preferable.

The amount of polymerization initiator (c) is usually 0.0005 to 5 %, preferably 0.001 to 1 %, more preferably 0.005 to 0.5 %, by weight of polymerizable monomer (a). If the amount of (c) exceeds 5 %, the obtained polymers undesirably have reduced molecular weight. If the amount is below 0.0005 %, on the other hand, either polymerization will not be initiated, or a very long time is inefficiently required until initiation.

According to the invention, it is possible to add, if necessary, polysaccharides such as starch and/or cellulose to the aqueous solution noted above.

5

Examples of starch are such natural starches as potato starch, corn starch and rice starch and such processed starches as carboxymethylated starch and oxidized starch.

Examples of cellulose to be used are hydroxyalkyl cellulose, organic acid ester cellulose, alkyl ether cellulose, carboxylalkyl cellulose, etc.

The amount of polysaccharide is usually 0 to 20 %, preferably 0 to 10 %, with respect to the weight of polymerizable monomer (a).

According to the invention, the aqueous solution noted above can be obtained by dissolving or dispersing (a), (b), (c) and if necessary, the polysaccharide mentioned above, into water or a mixed solvent containing water and water-soluble organic solvent (e.g., methanol, ethanol, acetone, dimethylsulfoxide, dimethylformamide, etc.), preferably in water. If the water-soluble organic solvent is used with water, the amount of the water-soluble organic solvent is usually 50 % or below, preferably 30% or below based on the weight of water.

According to the invention, the polymerization initiation temperature is varied depending on the decomposition temperature of the polymerization initiator (c) used, but it is usually 0 to 70 °C, preferably 10 to 60°C, more preferably 20 to 50 °C. If the polymerization initiation temperature is below 0 °C, with the above illustrated radical polymerization initiator, polymerization will not be initiated since the decomposition speed of the initiator is too low, or the speed of polymerization if initiated is inefficiently very low. If the polymerization initiation temperature exceeds 70°C, the decomposition speed of the polymerization initiator (c) is increased to make it difficult to control the temperature of the system being polymerized. In addition, the chain termination constant of monomer during polymerization is increased to result in reduction of molecular weight or increase of the molecular weight distribution.

According to the invention, the polymerization temperature during polymerization is usually 20 to 95 °C, preferably 30 to 80 °C, more preferably 40 to 70 °C. If the polymerization temperature is below 20°C, the polymerization speed is extremely low. This means that a long polymerization time is inefficiently required to obtain a certain polymerization percentage and reduce residual monomer. If the polymerization temperature exceeds 95 °C, on the other hand, the decomposition speed of the polymerization initiator (c) is extremely increased. In addition, the chain termination constant of polymerizable monomer (a) during polymerization is increased to result in reduced molecular weight and/or increased molecular weight distribution. Further, since the polymerization initiator (c) is decomposed in a short time, the content of residual monomers in the obtained hydrogel polymers is increased. Further, the solvent is evaporated during the polymerization, resulting in lack of uniformity of the water content in the hydrogel polymer.

The polymerization is preferably carried out by setting the polymerization temperature to be in a range of 20 to 70 °C in a stage with polymerization percentages of no higher than 70 %, preferably no higher than 80 %, and elevating the temperature to 70 to 95 °C in a stage with polymerization percentages of 70 % and above before completion of the polymerization. By so doing, the polymerization time can be reduced, and also a hydrogel polymer containing less residual monomer can be obtained.

In a stage where the polymerization percentage is no higher than 70 %, the polymerization initiator in (c) is likely remaining. Therefore, if the temperature is elevated to 70 °C or above in this stage, the remaining polymerization initiator in (c) is caused to undergo sudden decomposition to result in molecular weight reduction. The polymerization percentage may be determined by forcibly discontinuing the polymerization by a cooling operation and then measuring the amount of remaining monomer by liquid chromatography.

The completion of polymerization does not always mean 100 % polymerization, but the monomer may remain in the product polymer in a usually permissible range (e.g., 1 % or below).

According to the invention, the term "constant temperature polymerization" does not mean that polymerization is carried out at a constant temperature but means a status of polymerization wherein the temperature of the system is controlled in a specific temperature range during polymerization.

Namely, according to the invention, it is impotant that the temperature difference between the polymerization initiation temperature and highest attained temperature during polymerization is controlled to be as small as possible. The temperature difference is usually 60 °C or below, preferably 40 °C or below. If the temperature difference exceeds 60 °C, the molecular weight distribution is increased even if the polymerization temperature is in the range of 20 to 95 °C, thus leading to increase of the molecular weight distribution, and hence increase of the water-soluble component content and reduction of the absorption performance.

According to the invention, the polymerization may be carried out in an inert gas stream atmosphere, if necessary. For the inert gas stream there may be used nitrogen gas, helium gas, carbon dioxide gas, etc.

For polymerization according to the invention, any polymerizing apparatus, which is capable of polymerizing the aqueous solution in the state of a layer by heating or cooling of surfaces in contact with

EP 0 496 067 A2

the aqueous solution noted above, may be used so long as it permits constant temperature polymerization through control of the temperature difference between the polymerization initiation temperature and highest attained temperature during polymerization in a predetermined range. Examples of such polymerizing apparatus are ① a belt conveyor type polymerizing apparatus, in which the aqueous solution on a belt of a belt conveyor or in which the aqueous solution sandwiched between upper and lower belts of a belt conveyor can be heated and/or cooled from the lower side or both upper and lower sides of the belt conveyor; ② a heat exchange type polymerizing apparatus, in which the aqueous solution can be heated and/or cooled from either or both side plate surfaces; ③ a centrifugal thin film type polymerizing apparatus, in which the aqueous solution can be heated and/or cooled from a peripheral wall; ④ a filter press type polymerizing apparatus, in which the aqueous solution can be heated and/or cooled from either or both sides; and ⑤ a cylindrical polymerizing apparatus provided with a jacket for heating and/or cooling the aqueous solution from surfaces in contact with the solution. Preferred polymerizing apparatuses are ① and ④ mentioned above. More preferred apparatuses are those of ① and ④ in which the aqueous solution can be heated and/or cooled from both sides.

According to the invention, when the aqueous solution is polymerized in the form of a flat layer, the thickness of the aqueous solution is usually 0.1 to 100 mm, preferably 0.5 to 50 mm, more preferably 1 to 30 mm. If the thickness of the layer exceeds 100 mm, control of the polymerization temperature of portions of the solution spaced apart from the contact surfaces (e.g., a portion of the solution on the opposite side in the case of heating or cooling the solution from one side, and central portion in the thickness direction in the case of heating or cooling from both sides) is difficult even where the aqueous solution is heated or cooled from the surfaces in contact with the solution. And as the result, obtainable hydrogel polymers will have reduced molecular weight and/or increased molecular weight distribution.

Where the tempereature of the system being polymerized is controlled by heating or cooling the aqueous solution from surfaces in contact with the solution, usually the solution is heated or cooled to the side opposite the surfaces in contact with the aqueous solution. It is possible to use any heating/cooling medium, e.g., coolant, cold water, hot water, cold air, hot air, hot steam, etc.

The material providing the surfaces in contact with the aqueous solution is not particularly limited, but it is suitably heat conductive in view of facilitating the heat transfer between the aqueous solution and heating/cooling medium.

Examples of such materials are such metals as stainless steel, iron, copper, nickel alloys, aluminum, bronze, lead and silver, glass and if necessary synthetic resins such as polyethylene, polypropyrene, polytetrafluoroethylene, etc. containing metal powders or inorganic powders.

Where metals are used as the material providing the surfaces in contact with the aqueous solution, the surfaces noted above may be covered or coated with well-known anti-stickiness resin, e.g., fluorine resins, silicone resins, polyethylene, polypropyrene and like synthetic resins, to such an extent that the heat conductivity of the material is not greatly decreased, for the purpose of facilitating the separation of polymer from the contact surfaces after polymerization.

According to the invention, the hydrogel polymer as noted above is usually obtainable in the form of a thin film or a sheet with a thickness of 0.1 to 100 mm, preferably 0.5 to 50 mm, more preferably 1 to 30 mm. This hydrogel polymer is formed into a desired shape without drying to obtain the formed article of water-absorbing hydrogel.

According to the invention, the method of forming the hydrogel polymer is by no means limited, and it is possible to adopt any ordinary method, e.g., cutting, chopping, stamping, slicing, extruding, embossing, rolling and stretching.

If necessary, the formed aticles of the water-absorbing hydrogel according to the invention may be covered or sandwiched with paper, non-woven fabrics, fabrics, water-soluble or water-insoluble synthetic resin films, etc. The covering or sandwiching of the hydrogel articles with these materials may be carried out in a stage of hydrogel polymer before the forming or after the forming.

The shape of the formed article is by no means limited, and it is possible to form the polymer to any desired shape. Various shapes may be selected depending on use or purpose, e.g., film-like, tape-like, mat-like, strip-like, bar-like, string-like, sheet-like, corrugated sheet, net-like, cube-like, spherical, indefinite shape, etc. The size, length and width are also by no means limitative.

In the case of application to paper diapers, for example, a sheet-like hydrogel polymer may, if necessary, be rolled to a thickness of about 0.5 to 2 mm by passing it through embossing rollers, while concurrently forming with pores or slits, followed by stamping into a shape identical with or smaller than the paper diaper absorber made of pulp or the like. Then, if necessary, the upper and lower surfaces of the resultant article may be sandwiched with tissue paper, and then the resultant article may be inserted into the paper diaper.

7

In the case of application to water retainers for soil, the hydrogel polymer may be cut into a cube-like shape of about 1 to 5 mm per side by using a gel cutter or the like.

In the case of application to packing materials, the polymer may be stamped to a desired shape.

According to the invention, a releasing agent may, if necessary, be added for the purposes of improving the separation of the hydrogel polymer from the polymerization apparatus or preventing the sticking of hydrogel articles to one another during and/or after the forming.

Examples of such releasing agents are inorganic powders (e.g., calcium carbonate, aluminum hydroxide, aluminum oxide, silicon dioxide, titanium oxide, etc.), natural material particles (e.g., wheat flours, rice bran, starch, carboxymethylcellulose, hydroxyethylcellulose, hydroxypropylcellulose, etc.), synthetic polymer or synthetic resin powders (e.g., polyvinyl alcohol, polyester, silicone resins, polyethylene, polypropyrene, etc.), anionic surfactants (e.g., triethanolamine lauryl sulfate, polyoxyethylene sodium lauryl sulfate, sodium lauryl sulfosuccinate, sodium lauryl phosphate, sodium lauryl sulfoacetate, etc.), non-ionic surfactants (e.g., lauryl dimethylamine oxide, glycerol monostearate, polyethyleneglycol monostearate, sorbitan monolaurate, polyoxyethylenesorbitan monolaurate, nonylphenylpolyoxyethylene, etc.), cationic surfactants ( e.g., stearyltrimethylammonium chloride, distearyldimethylammonium chloride, lanorin fatty acid aminopropylethyldimethylammonium ethyl sulfate, etc.), amphoteric surfactants (e.g., betaine coconut oil fatty acid amide propyldimethyl aminoacetate, betaine lauryl dimethylaminoacetate, betaine 2-alkyl-N-carboxylmethyl-N-hydroxyethylimidazolinium, etc.), and polymer surfactants (e.g., cationated cellulose, polyethylene glycol, polypropyrene glyclol, sodium polyacrylate, etc.) as well as well-known silicone and fluorine surfactants. Among these releasing agents, the inorganic powder and anionic and non-ionic surfactants are preferred.

The timing of addition of the releasing agent is by no meams limited. Usually, the releasing agent is added to the aqueous solution before polymerization or before, during and/or after the forming of the hydrogel polymer. Preferably, it is added in a stage before or simultaneously with the forming of the hydrogel polymer.

As the addition method for the releasing agent, a powdery releasing agent may be added in the powdery state or in a state dispersed in water or dissolved in water. A liquid releasing agent may be added in situ or in a state dispersed in water or dissolved in water.

The amount of the releasing agent may be varied depending on the composition of polymerizable monomer, concentration of polymerization, size of hydrogel particles after forming, kind of forming machine and so forth. With a powdery releasing agent, the amount thereof usually is 0 to 50 %, preferably 0.001 to 30 %, more preferably 0.1 to 10 %, with respect to the weight of solid content in the hydrogel. If the amount of the releasing agent exceeds 50 %, the product will contain a great amount of releasing agent, and therefore may have reduced water absorption performance. When using a powdery releasing agent, releasing agent may be separated and recovered in any stage after forming of hydrogel. The amount of a liquid releasing agent usually is 0 to 5 %, preferably 0.0001 to 3 %, by weight.

The hydrogel articles according to the invention may contain antiseptic agents, rust-proofing agents, disinfectants, antioxidants, ultraviolet-absorbants, coloring agents, etc., these agents being added in desired states.

Further, for the purposes of facilitating the heat removal during polymerization or improving the water absorption speed of the obtainable articles, if necessary, inorganic fillers (e.g., calcium carbonate, silicon dioxide, aluminum oxide, titanium oxide, pearlite, vermiculite, shirasu balloon, etc.), organic fillers (e.g., pulp, synthetic fibers, cellulose powder, etc.), synthetic resin powder or foams (e.g., urea resin foams, polystyrene foam, polyethylene foam, etc.) may be added into the aqueous solution.

Examples

The invention will be hereinafter further explained in detail with its examples and comparative examples. These examples described herein are illustrative and not restrictive.

Absorption under non-pressure and absorption under pressure were measured in the following ways. Hereinafter, it being to be understood that % is by weight unless a different definition is noted.

* Absorption under non-pressure:

1 g of hydrogel polymer was charged into a tea bag made from 250-mesh nylon net, which was then dipped in a physiological salt solution (i.e., aqueous solution containing 0.9 % of sodium chloride) for 60 minutes and then taken out and left for water removal for 15 minutes. Then, the weight increase was measured as absorption under non-pressure of the physiological salt solution.

* Absorption under pressure:

0.2 g of hydrogel polymer sample which was formed into a disc having a diameter of 30mm by rolling was charged into a cylindrical plastic tube having an inner diameter of 30 mm and a height of 60 mm and having a 250-mesh nylon net set to its bottom. The sample was then given a load of 20 $g/cm^2$ by putting a weight having an outer diameter of 30 mm on it.

Then, the tube containing hydrogel polymer was dipped with the nylon net down in a vessel 12 cm in diameter filled with 80 ml of physiological salt solution. The weight increase of the sample due to absorption of the physiological salt solution was measured 60 minutes afterwards as the absorption under pressure.

Example 1

360 g of acrylic acid, 0.05 g of methylenebisacrylamide and 250 g of deionized water were poured into and mixed in a separable flask provided with a thermometer and a cooling tube. Then, 312 g of an aqueous solution containing 48 % of sodium hydroxide was gradually added to the mixture while holding the temperature of the system within 40 °C, thus neutralizing 75 mol % of acrylic acid. To this solution was added 0.05 g of "V-50", (an azo type polymerization initiator manufactured by Wako Pure Chemical Industries, Ltd.). The dissolved oxygen content of the solution was then reduced to 1 ppm or below by introducing nitrogen gas. The resultant solution was then poured into a stainless steel tray which was filled with nitrogen gas, to a depth of 10mm in the tray, and the top of the tray was then sealed with polyethylene film to prevent entering of oxygen. The tray was then put into a hot water bath at 50 °C, and polymerization was initiated.

The temperature of the system being polymerized was held to be 40 to 50 °C during polymerization and then was elevated to 80 °C about 45 minutes later, after reaching a polymerization percentage of 85 %. Then about 20 minutes afterwards the polymerization was completed and a sheet like hydrogel polymer [A] having a water content of 48% was obtained.

This hydrogel polymer [A] was formed according the method mentioned before, and the obtained shaped polymers were applied to paper diapers. The diapers had excellent water absorption and excellent leakage prevention.

Example 2

300 g of acrylic acid, 862 g of 2-acrylamide-2-methylpropanesulfonic acid, 0.05 g of methylenebisacrylamide and 300 g of deionized water were poured into and mixed in a separable flask provided with a thermometer and a cooling tube. Then, 694 g of an aqueous solution containing 48 % of sodium hydroxide was gradually added to the mixture while holding the temperature of the system within 40 °C, thus neutralizing the mixed solution. To this solution was added 0.05 g of "V-50". The dissolved oxygen content of the solution was then reduced to 1 ppm or below by introducing nitrogen gas. The resultant solution was then poured into a stainless steel tray which was filled with nitrogen gas, to a depth of 8 mm in the tray, and top of the tray was then sealed with polyethylene film to prevent entering of oxygen. The tray was then put into a hot water bath at 45 °C, and polymerization was initiated.

The temperature of the system being polymerized was held to be 40 to 60 °C during polymerization and a sheet like hydrogel polymer [B] having a water content of 62% was obtained. The obtained hydrogel polymer [B] were sliced to produce tapes having a width of 20 mm. The tapes were applied as segmentary water-blocking material for tunnel construction. They showed excellent water blocking effect.

Example 3

7.2 kg of acrylic acid, 1 g of trimethylolpropane triacrylate and 5 kg of tap water were poured into and blended in a neutralizing trough with jacket. Then 6 kg of an aqueous solution containing 48 % of sodium hydroxide was gradually dripped into the blend solution while holding the temperature thereof at 40 °C, thus neutralizing 75 mol % of the acrylic acid. Then, 0.5 g of potassium persulfate was added to the solution, and the dissolved oxygen content of the resultant solution was reduced to 1 ppm or below by introducing nitrogen gas. This solution was supplied to a movable belt polymerizer (or steel belt polymerizer), which is capable of heating and/or cooling of belt surfaces under nitrogen stream atmosphere, such that its thickness was 8 mm. Polymerization was initiated by heating to 50 °C. When the temperature of the polymer was increased to 55°C, the belt surfaces were heated and cooled to continue polymerization while maintaining the temperature of the system being polymerized at 50 to 60 °C. About 45 minutes later, after reaching of a polymerization percentage of 87 %, the hydrogel polymer was transferred to a maturing trough at 75 °C and held in the trough for about 30 minutes. And then the polymerization was completed. Sheet like hydrogel polymer [C] having water content of 48.5% was obtained.

This hydrogel polymer [C] was rolled to a thickness of 2 mm and then cut to a mat-like shape of 120 cm × 20 cm, which was used as an inner underlay for a tray containing sliced fish meat. Satisfactory drip absorbability was obtained.

Example 4

1 kg of the hydrogelpolymer [A] obtained in Example 1 was pulverized with a gel pulverizer to a cube-like shape having a size of about 1 to 3 mm, while spraying as releasing agent 30 g of an aqueous solution containing 10 % of "Profan-EX-24" (which was coconut oil fatty acid diethanolamide manufactured by Sanyo Chemical Industries, Ltd.). Formed articles [D] having a water containing ratio of 46.6% were obtained.

These formed articles were applied as water retainers for soil. These showed excellent water retaining effect.

Comparative example 1

360 g of acrylic acid, 0.05 g of methylenebisacrylamide and 250 g of deionized water were poured into and mixed in a separable flask provided with a thermometer and a cooling tube. Then, 312 g of an aqueous solution containing 48 % of sodium hydroxide was gradually added to the mixture while holding the temperature of the system within 40 °C, thus neutralizing 75 mol % of acrylic acid. To this solution was added 0.05 g of "V-50". The dissolved oxygen content of the solution was then reduced to 1 ppm or below by introducing nitrogen gas. The resultant solution was then poured into a stainless steel tray which was filled with nitrogen gas, to a depth of 10 mm in the tray, and top of the tray was then sealed with polyethylene film to prevent entering of oxygen.

The tray was then heated to 50 °C and subjected to polymerization under adiabatic condition. The polymerization proceeded with violent heat generation and there was obtained polymer [E] having a water content of 19% in about 15 minutes. The highest attained temperature during the polymerization was about 150 °C.

The results of measurements of the absorption under non-pressure and the absorption under pressure of the hydrogel polymer and hydrogel obtained in Examples 1, 2, 3 and Comparative example 1 are shown in Table 1.

Table 1

| Polymer | Absorption under non-pressure (g/g) | | Absorption under pressure (g/g) |
|---|---|---|---|
| | Water | Physiological salt solution | |
| [A] | 470 | 55 | 30 |
| [B] | 420 | 50 | 28 |
| [C] | 450 | 56 | 32 |
| [E] | 260 | 44 | 12 |

The method of the present invention has the following effects.

① According to the invention, the polymerization temperature is controlled to be in a predetermined range through external heating and/or cooling to attain constant temperature polymerization. The thus obtainable polymers have high molecular weight and narrow molecular weight distribution. Therefore, the obtainable hydrogel polymers and the formed articles thereof have excellent absorption performance and contain less water-soluble components.

In contrast, with prior art polymers produced through adiabatic polymerization of concentrations of alkaline metal salt of acrylic acid and acrylic acid as 30 % or above comparable to the concentration according to the invention in the presence of a crosslinking agent, difficultly have high molecular weight of polymer and narrow molecular weight distribution. Thus, they are inferior in the water absorption performance and contain large amounts of water-soluble components. The method of the present invention relates to the improvement about these problems mentioned above.

② The obtained hydrogel polymers and formed articles of hydrogel according to the method of the invention have the following characteristics.

(1) They have high absorption under non-pressure and high absorption under pressure.

(2) They have less water-soluble component and residual monomer contents.

(3) The obtainable hydrogel polymer and formed articles of hydrogel have suitable flexibility and elasticity.

(4) Since the hydrogel polymer is in the form of a thin film or a sheet, it can be readily formed into a desired shape without limitations imposed on the shape and size.

(5) The formed articles of hydrogel, unlike water-absorbing resin powder, do not require any specific dispersing apparatus in their application. In addition, there are no problems of pollution of working environments and inhalation of fine powder due to scattering of fine powder at the time of the dispersion.

With the above effects, the water-absorbing formed articles of hydrogel obtained by the method of the present invention are useful for various industrial purposes, for instance water-absorptive pad, sanitary materials used in contact with human's body (e.g., paper diapers for infants or adults, sanitary cotton and incontinence pads); materials used in contact with foods, for instance freshness retaining materials, cold retaining materials and drip absorbers; materials for separating water from oil or other dehydrating or drying agents; water retainers for plant and soil etc.; sludge solidification agents, anti-dewing agents; and water-blocking materials or packing materials for civil engineering and costructon work purposes.

## Claims

1. A metod for producing formed articles of water-absorbing hydrogel comprising the steps of:

(I) supplying an aqueous solution containing (a) a polymerizable monomer having a hydrophilic functional group, (b) a crosslinking agent and (c) a polymerization initiator to a polymerizing apparatus capable of polymerizing said aqueous solution in a form of a layer;

(II) causing constant temperature polymerization of said aqueous solution by controlling the temperature of the system being polymerized to 20 to 70 °C without agitating said solution during polymerization, to obtain a hydrogel polymer having a water content of 20 to 70 % by weight; and

(III) forming the hydrogel polymer to a desired shape.

2. A method for producing formed articles of water-absorbing hydrogel according to claim 1, wherein the concentration of said polymerizable monomer (a) is 30 to 80 % by weight based on said aqueous solution, said crosslinking agent (b) is capable of copolymerization with said polymerizable monomer (a) and the amount of (b) is 0.0001 to 5 % by weight of said polymerizable monomer (a).

3. A method for producing formed articles of water-absorbing hydrogel according to claim 1, wherein the temperature difference between the polymerization initiation temperature and highest attained temperature during polymerization is controlled within 40 °C in said constant temperature polymerization.

4. A method for producing formed articles of water-absorbing hydrogel according to claim 1, wherein the water content of said hydrogel polymer is 40 to 60 % by weight.

5. A method for producing formed articles of water-absorbing hydrogel according to claim 1, wherein said hydrogel polymer is in the form of a thin film or a sheet with a thickness of 0.5 to 50 mm.